# DEMANDE DE BREVET EUROPEEN

(11) **EP 1 291 267 A1**
(43) Date de publication de la demande: **12.03.2003**
(21) Numéro de dépôt: 01402312.1
(22) Date de dépôt: 06.09.2001
(51) Int. Cl.: B62D 43/10

(54) **Dispositif de fixation de roue de secours, notamment pour véhicule automobile, du type comprenant un arbre sur lequel peut être monté un élément tel qu'une roue de secours**

(71) Demandeur: Rapid S.A., 95650 Puiseux Pontoise (FR)
(72) Inventeur: Leon, Jean-Pierre René, 78800 Houilles (FR); Schreck, Thomas, 98631 Halna (DE)
(74) Mandataire: Bentz, Jean-Paul

(57) **Abrégé**

L'invention concerne un dispositif de fixation d'un élément tel qu'une roue de secours, notamment pour véhicule automobile.

Ce dispositif est du type comprenant un arbre sur lequel peut être monté ledit élément tel qu'une roue de secours et est caractérisé en ce que la longueur de l'arbre portant cet élément est variable et est formé d'au moins deux parties (1, 2, 3) qui sont susceptibles d'être emboîtées télescopiquement.

L'invention est utilisable pour des roues de secours de véhicule automobile.

## Description

L'invention concerne un dispositif de fixation de roues de secours, notamment pour véhicule automobile, du type comportant un arbre sur lequel peut être monté un élément tel qu'une roue de secours.

L'inconvénient des dispositifs connus de ce type réside dans le fait qu'un dispositif spécifique doit être prévu pour chaque roue de secours dont la hauteur est déterminée par sa jante.

La présente invention a pour but de proposer un dispositif du type indiqué plus haut, qui pallie l'inconvénient des dispositifs connus.

Pour atteindre ce but, le dispositif de fixation selon l'invention est caractérisé en ce que la longueur d'un arbre porteur dudit élément tel qu'une roue de secours est variable.

Selon une caractéristique de l'invention, l'arbre est formé par au moins deux parties télescopiquement emmanchables.

Selon une autre caractéristique de l'invention, la partie d'arbre intérieure comporte sur sa face extérieure cylindrique au moins un ergot radial avantageusement cylindrique et l'autre partie d'arbre est réalisée sous forme d'un manchon d'emboîtement qui est déplaçable axialement et circonférentiellement sur la première partie et comporte des trous qui sont décalés dans la direction axiale du manchon et dans lesquels l'ergot est susceptible de s'encliqueter.

Selon une autre caractéristique de l'invention, le manchon d'emboîtement comporte au moins une fente s'étendant axialement à partir de l'extrémité emboîtable sur la partie intérieure, qui est un peu plus large que le diamètre de l'ergot, et chaque trou d'encliquetage est décalé par rapport à la fente, dans la direction circonférentielle et les zones de la partie intérieure et du manchon d'emboîtement, qui portent l'ergot et comprennent les trous d'encliquetage sont déplaçables radialement, élastiquement, l'un par rapport à l'autre, pour assurer un mouvement rotatif du manchon sur la partie interne entre une position dans laquelle l'ergot est engagé dans la fente, et une position dans laquelle l'ergot s'engage dans un trou d'encliquetage.

Selon une autre caractéristique de l'invention, la zone porteuse de l'ergot de la partie interne de l'arbre est réalisée sous forme d'une languette axiale, mobile élastiquement vers l'intérieur.

Selon une autre caractéristique de l'invention, la zone portant un trou d'encliquetage du manchon d'emboîtement est réalisée sous forme d'une languette s'étendant dans la direction circonférentielle à partir de la fente et est déplaçable radialement et élastiquement vers l'extérieur.

Selon encore une autre caractéristique de l'invention, le manchon d'emboîtement selon l'invention comporte deux fentes axiales diamétralement opposées, sur les deux côtés de chacune, à proximité de celles-ci, sont prévus des trous d'encliquetage axialement décalés, et chaque partie d'arbre intérieure comporte deux ergots qui sont diamétralement opposés et à chacun desquels est associée une fente.

Selon encore une autre caractéristique de l'invention, le dispositif selon l'invention comporte deux manchons d'emboîtement, qui sont susceptibles d'être emboîtés sur la partie interne à partir d'une extrémité de celle-ci, la partie interne comportant au moins un ergot pour chaque manchon.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue latérale d'un premier mode de réalisation d'un dispositif de fixation pour roue de secours, selon la présente invention ;
- la figure 2 correspond à la figure 1, montre cependant le dispositif dans une position angulairement décalée de 90° ;
- la figure 3 est une vue axiale du dispositif selon la figure 1 ;
- la figure 4 est une vue à plus grande échelle du détail entouré d'un cercle IV sur la figure 3 ;
- la figure 5 est une vue à plus grande échelle d'une zone porteuse d'un ergot de la partie interne d'un dispositif selon l'invention ;
- la figure 6 montre un autre mode de réalisation de la présente invention ; et
- la figure 7 est une vue à plus grande échelle de la zone comportant un trou d'encliquetage d'un manchon d'emboîtement de l'invention, selon la figure 6.

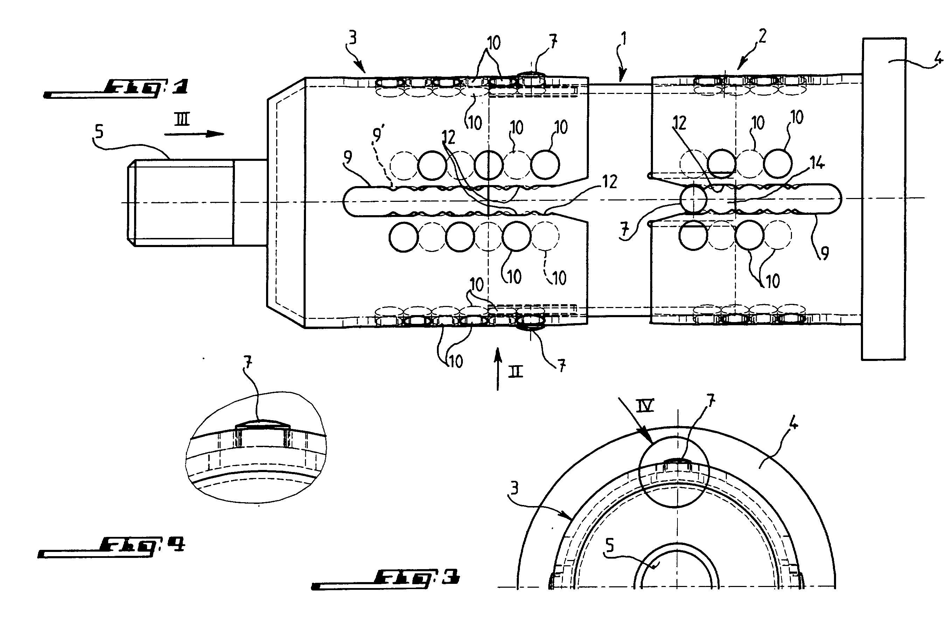

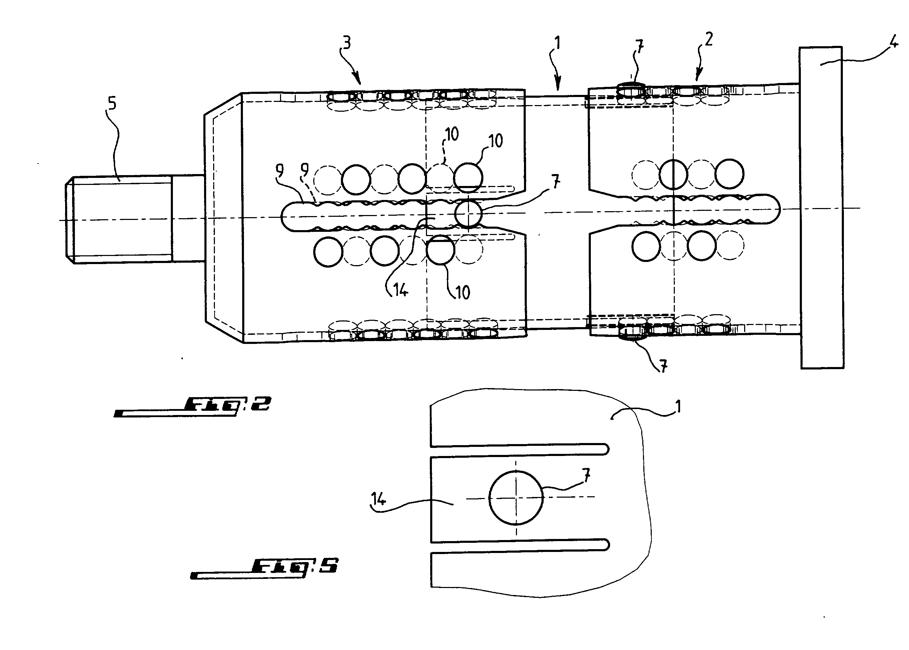

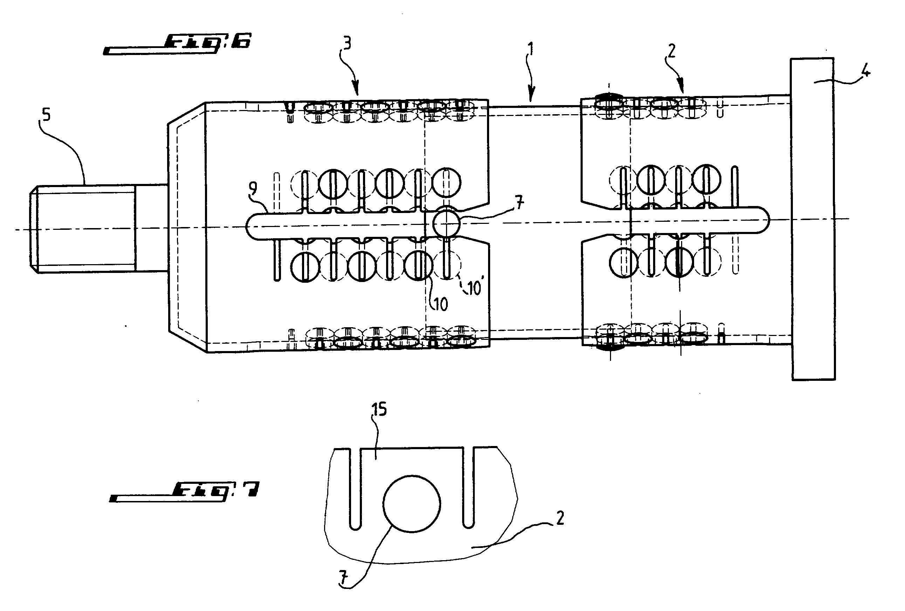

Les figures 1, 2 et 4 montrent deux modes de réalisation d'un dispositif de fixation pour roue de secours, notamment pour véhicule automobile, qui se compose de trois parties, à savoir une partie médiane 1 et deux parties de manchon d'emboîtement 2, 3 qui sont susceptibles d'être emboîtées sur la partie médiane 1, à partir des extrémités de celle-ci. La première partie réalisée sous forme d'un manchon d'emboîtement 2 porte à une extrémité un collet 4 faisant saillie radialement vers l'extérieur, pour le blocage de la partie 2 à la jante d'une roue de secours. L'autre extrémité du manchon 2 est ouverte pour l'emboîtement sur la partie médiane 1. L'autre partie d'emboîtement 3, en forme d'un manchon porte à son extrémité qui n'est pas emboîtée et est fermée, un embout fileté 5 pour le vissage d'un écrou de blocage. Les trois parties 1, 2, 3 forment un arbre sur lequel peut être montée la jante d'une roue de secours et dont la longueur est variable selon le type de jante, de façon à permettre une compensation en hauteur pour les roues de secours.

Dans les modes de réalisation représentés, du dispositif de fixation de roue de secours selon l'invention, deux ergots cylindriques radialement en saillie 7 sont prévus sur la surface périphérique cylindrique de chaque extrémité de la partie 1, qui sont diamétralement opposés. Les deux paires d'ergots 7 des deux extrémités de la partie médiane 1 sont décalées angulairement de 90° sur le pourtour.

Chaque partie d'emboîtement 2, 3 en forme de manchon susceptible d'être emboîté sur la partie médiane 1, à partir d'une extrémité de celle-ci, comporte quatre fentes 9 qui s'étendent dans la direction axiale, à partir de son extrémité ouverte emboîtable. Les quatre fentes 9 sont angulairement décalées de 90° les unes par rapport aux autres, sur le pourtour. Chaque fente 9 est destinée à la réception d'un ergot 7 et présente une largeur correspondante. Sur les deux côtés de chaque fente axiale 9 sont prévus des trous 10 qui sont décalés les uns par rapport aux autres, dans la direction axiale. Les trous 10 sont disposés à une distance relativement faible de la fente 9, dans la direction circonférentielle. Dans les modes de réalisation représentés, de l'invention, les trous sont pratiqués, de façon alternée sur l'un et l'autre côté de la fente.

Chaque trou 10 est dimensionné de façon que l'ergot correspondant 7 peut s'y encliqueter après une rotation appropriée du manchon 2, 3 considéré sur la périphérie de la partie médiane 1. Pour assurer un positionnement convenable des manchons 2, 3 sur la partie médiane 1, par rapport aux trous d'encliquetage 10, chaque bord d'une fente 9 est légèrement profilé et comporte des indentations 12 en forme d'arcs de cercle dont le rayon de courbure correspond au rayon de l'ergot correspondant. Il est encore à noter que la zone d'ouverture de chaque fente 9 s'élargit progressivement en direction du bord de la partie, pour permettre un emboîtement aisé.

Pour permettre une rotation de chaque manchon 2, 3 sur la partie médiane 1 entre une position dans laquelle les ergots 7 se trouvent engagés dans la fente 9, et la position dans laquelle les ergots s'encliquètent dans les trous correspondants 10, dans le mode de réalisation selon les figures 1, 2, la zone de la partie médiane 1 qui porte un ergot 7 est réalisée sous forme d'une languette 14 qui est déplaçable élastiquement et radialement vers l'intérieur, lors de la rotation de la partie en forme de manchon 2, 3. La languette 14 est formée par des découpes axiales à partir de la partie médiane, sur les deux côtés de l'ergot.

Dans le mode de réalisation selon la figure 6, chaque zone de bordure d'une fente 9, qui comporte un trou d'encliquetage 10, est réalisée sous forme d'une languette 15 qui s'étend dans la direction périphérique, comme cela est clairement représenté sur la figure 7. Chaque languette 15 est déplaçable radialement élastiquement vers l'extérieur lors de l'emboîtement en passant sur un ergot 7.

Il ressort de la description qui précède, que la longueur de l'arbre est variable par un emboîtement approprié des parties de manchon sur la partie médiane et est ainsi adaptable à la hauteur d'une jante de roue de secours. On obtient à chaque fois un arbre rigide après l'encliquetage des ergots dans les trous correspondants.

Dans les modes de réalisation représentés et qui viennent d'être décrits, de l'invention, le dispositif de fixation de roue de secours est formé par trois parties. Il est cependant possible de le réaliser seulement en deux parties, avec seulement un manchon d'emboîtement et une partie intérieure, qui comporte alors à une extrémité soit le collet pour le blocage à une jante ou l'embout pour le vissage d'un écrou de blocage. Bien entendu le nombre des ergots, des trous et des fentes peut être choisi différemment et leur disposition peut être changée sans quitter le cadre de l'invention.

## Revendications

1. Dispositif de fixation d'un élément tel qu'une roue de secours, notamment pour véhicule automobile, du type comprenant un arbre sur lequel peuvent être montés les roues de secours et dont la longueur est variable pour être adaptable à la hauteur de la jante de la roue de secours à monter, l'axe étant formé d'au moins deux parties qui sont susceptibles d'être emboîtées téléscopiquement, **caractérisé en ce que** la partie d'arbre intérieure (1) porte sur sa surface extérieure cylindrique au moins un ergot radial, de préférence cylindrique (7), et l'autre partie d'arbre (2, 3) est réalisée sous forme d'un manchon d'emboîtement qui est axialement et circonférentiellement déplaçable sur la première partie (1) et comporte des trous (10) qui sont décalés dans la direction axiale du manchon et dans lesquels l'ergot (7) est susceptible de s'encliqueter.

2. Dispositif selon la revendication 1 **caractérisé en ce qu'**un manchon d'emboîtement (2, 3) comporte au moins une fente (9) qui s'étend à partir de son extrémité emboîtable sur la partie interne (1), dans la direction axiale, et est légèrement plus large que le diamètre de l'ergot (7), que chaque trou d'encliquetage (10) est décalé dans la direction circonférentielle par rapport à la fente (9), et que les zones de la partie interne (1) et du manchon d'emboîtement (2, 3), qui portent respectivement l'ergot (7) et les trous d'encliquetage (10), sont déplaçables radialement relativement l'une par rapport à l'autre, pour permettre une rotation du manchon (2, 3) sur la partie interne (1) entre une position dans laquelle l'ergot (7) est engagé dans la fente (9) et une position dans laquelle l'ergot (7) est engagé dans un trou d'encliquetage (10).

3. Dispositif selon l'une des revendications 1 ou 2, **caractérisé en ce que** 1a zone porteuse d'un ergot (7) de la partie interne (1) de l'arbre est réalisée sous forme d'une languette axiale (14), susceptible de se déplacer élastiquement vers l'intérieur.

4. Dispositif selon l'une des revendications 1 ou 2, **caractérisé en ce que** la zone comportant un trou d'encliquetage (10) du manchon d'emboîtement (2, 3) est réalisée sous forme d'une languette (15) s'étendant à partir d'une fente (9) dans la direction périphérique et qui est déplaçable élastiquement vers l'extérieur.

5. Dispositif selon l'une des revendications 1 à 4, **caractérisé en ce qu'**un manchon d'emboîtement (2, 3) comporte au moins deux fentes axiales (9) diamétralement opposées, que des trous d'encliquetage (10) sont prévus sur les deux côtés de chaque fente, au voisinage de celles-ci, qui sont axialement décalés, et **en ce que** la partie d'arbre interne (1) porte deux ergots (7) qui sont disposés diamétralement opposés et sont associés chacun à une fente (9).

6. Dispositif selon l'une des revendications précédentes, **caractérisé en ce qu'**il comporte deux manchons d'emboîtement (2, 3) qui sont susceptibles d'être emboîtés chacun sur une extrémité de la partie intérieure (1) formant une partie médiane, la partie interne comportant au moins un ergot (7) pour chaque manchon (2, 3).
